(19) Europäisches Patentamt
European Patent Office
Office européen des brevets

(11) **EP 2 073 421 A1**

(12) **EUROPEAN PATENT APPLICATION**

(43) Date of publication:
**24.06.2009 Bulletin 2009/26**

(51) Int Cl.:
*H04L 1/00* (2006.01)    *H04L 27/26* (2006.01)

(21) Application number: **07291571.3**

(22) Date of filing: **19.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Alcatel Lucent**
**75008 Paris (FR)**

(72) Inventors:
• **Peeters, Michael**
**1742 Ternat (BE)**

• **Maes, Jochen**
**2431 Veerle (BE)**
• **Guenach, Mamoun**
**1830 Machelen (BE)**

(74) Representative: **Narmon, Gisèle Marie Thérèse et al**
**Alcatel-Lucent Bell NV**
**Copernicuslaan 50**
**2018 Antwerpen (BE)**

(54) **Method and apparatus for transmitting a data signal over a transmission channel**

(57)    The present invention relates to a method for transmitting a data signal over a transmission channel (12a), which transmission channel forming part of a multiple inputs multiple outputs transmission system (14).

A method according to the invention further comprises the steps of:
- determining an error correction capability that is applicable to a data sequence (120) conveyed by the data signal,
- abusing a part (symbol_id, {ki}) of the data signal with a crosstalk evaluation signal (abuse_signal), and within the limits of the error correction capability.

The present invention also relates to a transceiver unit, and to an access node or a customer premises equipment comprising such a transceiver unit.

Fig. 2

**EP 2 073 421 A1**

**Description**

The present invention relates to a method for transmitting a data signal over a transmission channel, which transmission channel forming part of a Multiple Inputs Multiple outputs (MIMO) transmission systems.

Crosstalk (or inter-channel interferences) is a major source of channel impairment for MIMO transmission systems, such as Digital subscriber Line (DSL) transmission systems.

As the demand for higher data rates increases, DSL systems are evolving toward higher frequency bands, wherein crosstalk between neighboring transmission lines (that is to say, transmission lines forming part of the same cable binder or connected to the same piece of equipment) is more pronounced (the higher the frequency, the stronger the coupling).

A MIMO system can be described by the following linear model:

$$\mathbf{Y}(f) = \mathbf{H}(f)\mathbf{X}(f) + \mathbf{Z}(f) \quad (1)$$

wherein the N-component complex vector X, respectively Y, denotes a discrete frequency representation of the data symbols transmitted over, respectively received from, the N channels, and wherein the N-component complex vector Z denotes some additional noise present over the N channels, such as alien interferences, thermal noise and Radio Frequency Interferences (RFI), and wherein the NxN complex matrix H is referred to as the channel matrix. The (i,j)-th component of the channel matrix H describes how the communication system produces a signal on the i-th channel output in response to a signal being transmitted to the j-th channel input. The diagonal elements of the channel matrix describe direct channel coupling(s), and the off-diagonal elements of the channel matrix describe inter-channel coupling(s).

Different strategies, referred to as Dynamic spectrum Management (DSM), have been developed to mitigate crosstalk and to maximize effective throughput and line stability. DSM is gradually evolving from spectral management techniques (DSM level 0-2) to multi-user signal coordination (DSM level 3).

One technique for reducing inter-channel interferences is joint signal precoding (or vectoring), with precoding, signals are passed through an artificial precoding channel before being transmitted over the respective transmission channels. The precoding channel is designed so that the concatenation of the precoder and the transmission channel results in little or no interference at the receiver. Precoding can be performed within an access node or within an external pre-coding unit.

The performance of precoding depends critically on the parameters of the precoding channel, which parameters are to be computed and updated according to the actual crosstalk impairing the transmission system.

A first prior art method for estimating the actual crosstalk in e.g. the downstream direction comprises the steps of measuring the normalized slicer error at the customer Premise Equipment (CPE), reporting the so-measured slicer error through a feedback channel to a crosstalk estimation unit, and thereupon estimating the amplitude and phase of the crosstalk channel transfer function.

A second prior art method for estimating the crosstalk comprises the steps of abusing the disturber or victim line with a crosstalk evaluation signal, measuring the signal to Noise plus interference Ratio (SNIR) at the CPE of the victim line, averaging SNIR measurements over a set of carriers and a period of time, reporting the so-averaged SNIR through a feedback channel to a crosstalk estimation unit, and thereupon estimating the amplitude and phase of the crosstalk channel transfer function.

Examples of crosstalk evaluation signals are a unit vector, a scaled replica of the disturber or victim line signal(s), etc.

This second prior art method can advantageously be used to cancel crosstalk into legacy lines, possibly in combination with the first prior art method.

Yet, this method is disadvantageous in that signal abusing impacts regular data transmission and may cause unexpected binary errors (because the abuse signal will be perceived as additional noise at the receive side), or may require some additional noise margin (thereby reducing the available bit rate).

It is an object of the present invention to improve crosstalk estimation while mitigating the impact of signal abusing.

The objectives of the present invention are achieved and the aforementioned shortcomings of the prior art are overcome by a method for transmitting a data signal over a transmission channel, which transmission channel forming part of a MIMO (or vectored) transmission system, wherein the method comprises the steps of:

- determining an error correction capability that is applicable to a data sequence conveyed by said data signal,
- abusing a part of said data signal with a crosstalk evaluation signal, and within the limits of said error correction capability.

In a first step, one determines an error correction capability that is configured for reliably recovering a data sequence received through a noisy channel.

Forward Error correction (FEC) codes, such as linear block coding, convolutional coding, turbo-coding, etc, provide a receiver with the ability to correct data errors within a received and corrupted data sequence, yet only up to a predetermined extent, the value of which depends on the amount of redundant information that is added to the initial payload, and on the performance of the encoding algorithm. The error correction capability is typically expressed as a maximum number of recoverable bits or bytes per code word.

FEC can be combined with data interleaving and/or erasure detection for improved error resilience.

This will eventually determines a part of the to-be-transmitted data signal that can be abused and yet that can still be recovered at the receive side without any damage. This is achieved by abusing data transmission only within the limits of the so-determined error correction capability.

A method according to the invention is advantageous in that signal abusing does not impair regular data transmission, or more precisely does impair data transmission, yet only in a way that is recoverable at the receive side.

A further embodiment of a method according to the invention is characterized in that said abused part corresponds to preliminarily selected frequency carriers of said data signal.

By advantageously selecting one or more frequency carriers among the whole set of carriers assigned to a direction of communication, next by identifying the corresponding bits/bytes within a code word that are mapped to those frequency carriers, and eventually by abusing a part of the data signal such that the amount of impacted bits/bytes within a code word does not exceed the maximum amount of correctable information in that code word, more accurate crosstalk estimates are obtained and thus higher precoding gains are achieved.

For instance, CPE is expected to average SNIR measurements over a given set of carriers and for some period of time. One or more codewords (more than one in case of data interleaving) that are scheduled for transmission for that period of time, and the corresponding bits/bytes within those codewords that are mapped to those carriers, are identified. A further set of carriers is added until the amount of impacted bits/bytes reaches the maximum amount of correctable information (or some ratio thereof). A crosstalk evaluation data signal is then substituted at those carriers for the initial payload. As signal abusing perfectly matches the tone and time granularity of SNIR reporting, the accuracy of the crosstalk estimation process is greatly enhanced. The process is then repeated at a subsequent period of time with another group of tones until the whole frequency range over which crosstalk is to be estimated is covered.

A further embodiment of a method according to the invention is characterized in that said crosstalk evaluation signal fully substitutes for said abused part.

Indeed, by fully substituting the crosstalk evaluation signal for the regular payload signal, one can introduce some more noticeable statistical peculiarities in the direct or coupling signal that will be exploited for crosstalk evaluation, thereby enhancing the accuracy of the crosstalk estimation process at a further extent.

This is possible because FEC allows for the full substitution of the regular signal (an erroneous bit/byte is corrected no matter the amount of error artificially introduced into the regular signal).

Alternatively, the abuse and regular signals can be scaled and added together (typically, at constant power budget).

This embodiment is still advantageous in that regular transmission can be more strongly abused, or alternatively speaking the power of the abuse signal can be increased with respect to the power of the regular signal, e.g. beyond the noise margin, and still in a recoverable way at the receive side.

Still another embodiment of a method according to the invention further comprises the steps of determining temporal characteristics qualifying impulse noise affecting said transmission channel, and determining said abused part for it to be transmitted during an impulse noise free transmission period.

Examples of temporal characteristics of the impulse noise are a time-of-the-day or time-of-the-week occurrence, a repetition period, an impulse noise length, etc.

Signal abusing only takes place during impulse noise free transmission periods, that is to say transmission periods during which the probability of impulse noise occurrence is low, thereby protecting regular data transmission at a further extent.

The present invention also relates to a transceiver unit adapted to transmit a data signal over a transmission channel, which transmission channel forming part of a MIMO transmission system.

A transceiver unit according to the invention is further adapted:

- to determine an error correction capability that is applicable to a data sequence conveyed by said data signal,
- to abuse a part of said data signal with a crosstalk evaluation signal, and within the limits of said error correction capability.

Such a transceiver unit typically forms part of an wireline/mobile/wireless access node, such as a Digital subscriber Line Access Multiplexer (DSLAM), an optical terminal unit (for Fiber To The Node (FTTN) deployment), a 3G/4G mobile station, a wimax/wifi wireless station, etc.

Such a transceiver unit may also form part of a CPE (e.g., for use for DSL line bonding), such as a modem, a gateway, a bridge, a router, a set top box, a game console, etc.

Embodiments of a transceiver unit according to the invention correspond with the embodiments of a method according to the invention.

It is to be noticed that the term 'comprising', also used in the claims, should not be interpreted as being restricted to the means listed thereafter. Thus, the scope of the expression 'a device comprising means A and B' should not be limited to devices consisting only of components A and B. It means that with respect to the present invention, the relevant components of the device are A and B.

Finally, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The above and other objects and features of the invention will become more apparent and the invention itself will be best understood by referring to the following description of an embodiment taken in conjunction with the accompanying drawings wherein:

- fig. 1 represents a MIMO transmission system impaired by crosstalk,
- fig. 2 represents a Digital subscriber Line Access Multiplexer (DSLAM) according to the invention.

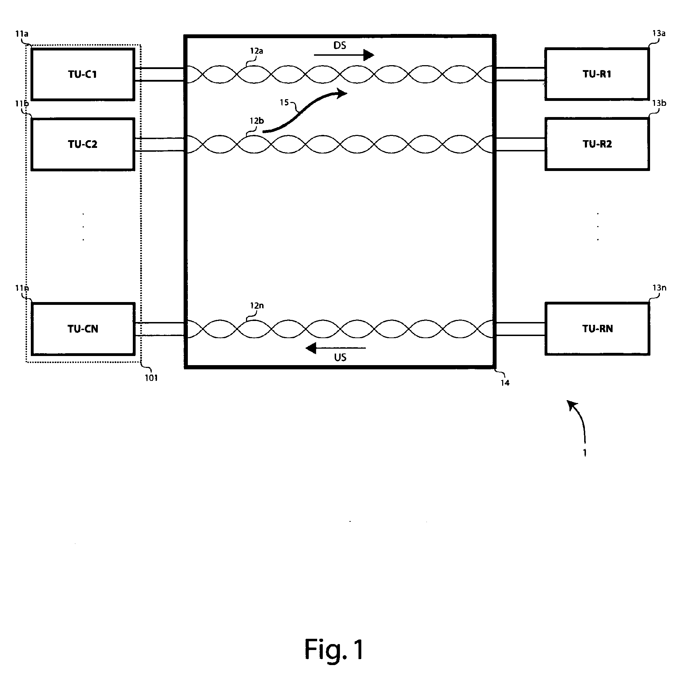

There is shown in fig. 1 a wireline XDSL-based data communication system 1 comprising:

- N transceiver units 11 (TU-C1 to TU-CN) at a central location,
- N transceiver units 13 (TU-R1 to TU-RN) at remote customer locations.

The transceiver units 11 form part of an access node 101; the transceiver units 13 form part of CPEs.

The transceiver units 11a to 11n are coupled to the transceiver units 13a to 13n through unshielded Twisted Pairs (UTP) 12a to 12n respectively.

Downstream (DS) communication refer to communication from central to remote location, and upstream (us) communication refer to communication from remote to central location.

DS crosstalk 15 from transmission line 12b into line 12a is depicted in fig. 1 for illustrative purpose. Transmission line 12b is referred to as the disturber line, and transmission line 12a is referred to as the victim line. DS crosstalk evaluation is based upon noise measurements performed at the DS receive end of the victim line, presently at transceiver unit 13a, and signal abusing is carried out at the DS transmit end of either the victim or disturber line (depending on the exact abusing technique being used), presently at either transceiver unit 11a or 11b.

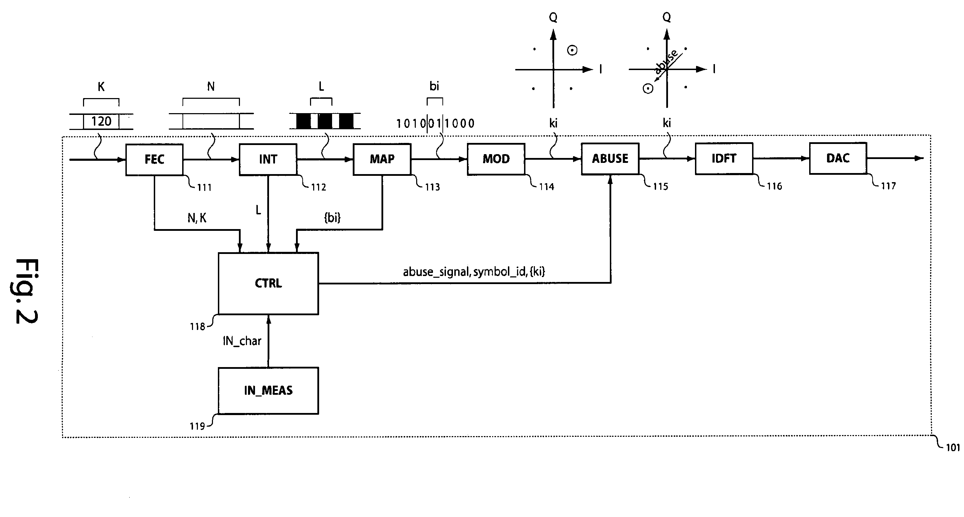

There is shown in fig. 2 a DSLAM 101 wherein a given DS transmission path is abused according to the invention. Focusing on this abused transmission path, the DSLAM 101 comprises the following noticeable functional blocks:

- a Reed Solomon (RS) encoder 111 (or FEC),
- a data interleaver 112 (or INT),
- a mapping unit 113 (or MAP),
- a QAM modulator 114 (or MOD),
- a signal abusing unit 115 (or ABU),
- an Inverse Discrete Fourier Transform unit 116 (or IDFT),
- a Digital to Analog Converter 117 (DAC),
- a control unit 118 (or CTRL) for controlling signal abusing,
- a measurement unit 119 (or IN_MEAS) for measuring and processing characteristics of impulse noise.

An output terminal of the RS encoder 111 is coupled to an input terminal of the data interleaver 112. An output terminal of the data interleaver 112 is coupled to an input terminal of the mapping unit 113. An output terminal of the mapping unit 113 is coupled to an input terminal of the QAM modulator 114. An output terminal of the QAM modulator 114 is coupled to an input terminal of the signal abusing unit 115. An output terminal of the signal abusing unit 115 is coupled to an input terminal of the IDFT unit 116. An output terminal of the IDFT unit 116 is coupled to an input terminal of the DAC 117. An output terminal of the DAC 117 is coupled through some additional circuitry (not shown) to a transmission line.

The control unit 118 is coupled to the RS encoder 111, to the data interleaver 112, to the mapping unit 113, to the signal abusing unit 115, and to the measurement unit 119.

The precoding stage is purposely omitted in fig. 2, and would typically have an input terminal coupled to an output terminal of the QAM modulator 114, and an output terminal coupled to an input terminal of the signal abusing unit 115. In that way, signal abusing is not impaired by joint signal precoding (strictly speaking, this is not a mandatory requirement for crosstalk evaluation).

The RS encoder 111 is adapted to encode K payload bytes 120 into a N bytes RS codeword. Such a RS code is adapted to correct as many as (N-K)/2 bytes error, no matter the underlying number of binary errors within those erroneous bytes, making them particularly suitable for protecting against error bursts.

The data interleaver 112 is adapted to interleave **RS** codewords at byte level so as to spread error bursts over many RS codewords (at the expense of some additional transmission delay). The data interleaving depth (i.e., the number of RS codewords concurrently interleaved together) is denoted as L. The interleaving stage is optional.

The mapping unit 113 is adapted to parse and to map the interleaved binary stream to specific frequency carriers according to their respective bit loading $\{b_i\}$. This initial mapping is determined during the initialization of the xDSL communication path (tone ordering table with their respective bit loading), and can be updated during showtime by means of on-Line Reconfiguration (OLR) commands through the Embedded operation channel (EOC) to meet new noise conditions.

The QAM modulators 114 are adapted to modulate the frequency carriers, and more specifically are adapted to determine a particular amplitude and phase of a carrier according to the binary sequence to be transmitted over that carrier (the length of which matches the carrier bit loading).

As an illustrative example, a 4-QAM modulation scheme is depicted in fig. 2 for frequency index ki, with the selected position encircled within the constellation grid.

The signal abusing unit 115 is adapted to substitute a crosstalk evaluation signal for the regular signal. Signal substitution takes place in the frequency domain, and at particular frequency indexes {ki}.

Still as an illustrative example, a new constellation point is substituted for the initial one in fig. 2, which point corresponding to the crosstalk data sequence to be transmitted.

Alternatively, the signal abusing unit 115 may add the crosstalk evaluation signal on top of the regular signal, possibly after signal re-scaling.

The signal abusing unit 115 is further supplied with the identity of the specific DMT symbols that are to be abused. (see symbol_id in fig. 2)

The IDFT units 116 are adapted to synthesize a digital time sequence from its discrete frequency representation, e.g. by means of the Inverse Fast Fourier Transform (IFFT) algorithm.

The DACs 117 are adapted to convert a discrete time sequence into an analog signal.

The measurement unit 119 is adapted to determine temporal characteristics IN_char of impulse noise impairing the transmission line over which the abused data sequence is to be transmitted, e.g. by measuring at the access node the impulse noise characteristics over the opposite receive path. Examples of temporal characteristics of the impulse noise are a time-of-the-day or time-of-the-week occurrence, a repetition period, an impulse noise length, etc.

Alternatively, temporal characteristics of the impulse noise can be measured by a CPE and reported back to the access node through the EOC, or can be obtained from a network analyzer coupled to the access node through a data communication network.

Possibly, spectral characteristics of the impulse noise can be measured too so as to refine the process of abusing the data signal.

The temporal characteristics IN_char of the impulse noise are made available to the control unit 118.

The control unit 118 is adapted to determine the specific DMT symbols, and the specific carriers thereof, that are to be abused so as to remain within the limits of the applicable error correction scheme.

The control unit 118 first determines a maximum amount of bytes that can be corrected by the RS code, presently (N-K)/2 bytes. Thereupon, the interleaving depth L and bit/carrier mapping information are used to determine how many consecutive DMT symbols, and how many carriers within these symbols, can be abused harmlessly.

The carrier selection may be arbitrary, or may be based on the SNIR tone-granularity reporting over the victim line as aforementioned.

The control unit 118 may further use the temporal characteristics IN_char of the impulse noise for further refining the selection of the DMT symbols to be abused so as the abused DMT symbols are transmitted during impulse noise free period, meaning period during which the error correction capability remains unused.

The DMT symbol selection may be further selected so as to match the SNIR time-granularity reporting over the victim line.

The crosstalk evaluation signal to be used for signal abusing, as well as the identities of the carriers and DMT symbols to be abused, are supplied to the signal abusing unit 115 (see respectively abuse_signal, symbo1_id, {ki} in fig. 2).

In an alternative embodiment of the present invention, a crosstalk evaluation signal is substituted for the whole DMT symbol. This embodiment can make an advantageous use of the Impulse Noise Protection (INP) value, which is defined as the maximum number of consecutive corrupted DMT symbols that can be corrected. Indeed by abusing no more than INP consecutive DMT symbols (or some specific ratio thereof), one makes sure that the receiver is able to recover the original data sequence.

INP value synthesizes by its own the error correction capability that applies over the transmission path, without the need for the control unit 118 to get an insight of the FEC coding parameters and bit/carrier mapping information. The INP value can be computed on the fly by reading the corresponding encoding parameters, or can be pre-configured and held in a data repository (in which case coupling between the control unit 118 on one side, the RS encoder 111, the data interleaver 112 and the mapping unit 113 on the other side, is no longer required).

INP is given by:

$$INP = \frac{1}{2}(S \times L)\left(\frac{N-K}{N}\right) \quad (2),$$ wherein S denotes

the number of multi-carrier data symbols per RS codeword (or spreading factor).

The spreading factor S is given by:

$$S = \frac{8 \times N}{L} \quad (3),$$ wherein L is the number of bits per multi-carrier data symbol.

Equation (2) is derived as follows:

- $S \times L$ is the number of data symbols over which a RS codeword is spread after interleaving.

- $\frac{S \times L}{N}$ is the part of a data symbol a single byte of a RS codeword occupies.

- $\dfrac{\cdots}{2}$ is the number of bytes RS is able to correct.

In still another alternative embodiment of the present invention, signal abusing takes place in the time-domain, that is to say after IDFT (before or after analog conversion).

If there is no preceding, signal abusing can even take place before the modulation stage by substituting a few bits here and there in the regular payload.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

**Claims**

1. **A method** for transmitting **a data signal over a transmission channel** (12a), which transmission channel forming part of **a multiple inputs multiple outputs transmission system** *(14), wherein* the method comprises the steps of:

   - determining **an error correction capability** (N, K) that is applicable to **a data sequence** (120) conveyed by said data signal,
   - abusing **a part** (symbol_id, {ki}) of said data signal with **a crosstalk evaluation signal** (abuse_signal), and within the limits of said error correction capability.

2. **A method** according to claim 1, *wherein* said abused part corresponds to **preliminarily selected frequency carriers** ({ki}) of said data signal.

3. **A method** according to any of the preceding claims, *wherein* said crosstalk evaluation signal fully substitutes for said abused part.

4. **A method** according to any of the preceding claims, *wherein* said method further comprises the steps of determining **temporal characteristics** (IN_char) qualifying impulse noise affecting said transmission channel, and determining said abused part for it to be transmitted during **an impulse noise free transmission period.**

5. A transceiver unit (11a, 13a) adapted to transmit **a data signal** over **a transmission channel** (12a), which transmission channel forming part of **a multiple inputs multiple outputs transmission system** (14), *wherein* the transceiver unit is further adapted:

   - to determine **an error correction capability** (N, K) that is applicable to **a data sequence** (120) conveyed by said data signal,
   - to abuse **a part** (symbol_id, {ki}) of said data signal with **a crosstalk evaluation signal** (abuse_signal), and within the limits of said error correction capability.

6. **An access node** comprising a transceiver unit according to claim 5.

7. **An access node** according to claim 6, which access node being **a wireline access node** (101).

8. **An access node** according to claim 6, which access node being **a wireless access station.**

9. **An access node** according to claim 6, which access node being **a mobile base station.**

10. **A customer premises equipment** comprising a transceiver unit according to claim 5.

Fig. 1

Fig. 2

**European Patent Office**

**EUROPEAN SEARCH REPORT**

Application Number

EP 07 29 1571

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2003/189999 A1 (KADOUS TAMER [US]) 9 October 2003 (2003-10-09) * figure 5 * ----- | 1-3,5-10 | INV. H04L1/00 H04L27/26 |
| Y | C-T LAM ET AL: "Design of Time and Frequency Domain Pilots for Generalized Multicarrier Systems" COMMUNICATIONS, 2007. ICC '07. IEEE INTERNATIONAL CONFERENCE ON, IEEE, PI, 1 June 2007 (2007-06-01), pages 4076-4081, XP031126304 ISBN: 978-1-4244-0353-0 * the whole document * ----- | 1-3,5-10 | |
| A | XIAOHONG MENG ET AL: "MIMO channel estimation using superimposed training" COMMUNICATIONS, 2004 IEEE INTERNATIONAL CONFERENCE ON PARIS, FRANCE 20-24 JUNE 2004, PISCATAWAY, NJ, USA,IEEE, vol. 5, 20 June 2004 (2004-06-20), pages 2663-2667, XP010709723 ISBN: 978-0-7803-8533-7 * the whole document * ----- | 1-3,5-10 | |
| | | | **TECHNICAL FIELDS SEARCHED (IPC)** |
| A | WO 2006/110849 A (NEWWIRE SYSTEMS INC [US]; HOBBEL JAN C [US]) 19 October 2006 (2006-10-19) ----- | 1-10 | H04L H04B |

The present search report has been drawn up for all claims

| Place of search | Date of completion of the search | Examiner |
|---|---|---|
| Munich | 11 July 2008 | Schiffer, Andrea |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 29 1571

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2008

| Patent document cited in search report | | Publication date | Patent family member(s) | | Publication date |
|---|---|---|---|---|---|
| US 2003189999 | A1 | 09-10-2003 | AU 2003221868 A1<br>WO 03088548 A2<br>US 2005008092 A1 | | 27-10-2003<br>23-10-2003<br>13-01-2005 |
| WO 2006110849 | A | 19-10-2006 | EP 1869734 A2<br>US 2007004286 A1 | | 26-12-2007<br>04-01-2007 |

For more details about this annex : see Official Journal of the European Patent Office, No. 12/82